# EUROPÄISCHE PATENTSCHRIFT

(11) **EP 2 290 729 B1**
(45) Veröffentlichungstag und Bekanntmachung des Hinweises auf die Patenterteilung: **10.10.2012**
(21) Anmeldenummer: 09010805.1
(22) Anmeldetag: 24.08.2009
(51) Int. Cl.: H01M 2/10, H01M 10/42, H01M 2/12, H01M 6/50

(54) **Elektrischer Energiespeicher mit Volumenkompensationseinrichtung**
Electric storage device with a volume compensation unit
Accumulateur d' énergie électrique avec une système de compensation de volume

(43) Veröffentlichungstag der Anmeldung: 02.03.2011
(73) Patentinhaber: Carl Freudenberg KG, 69469 Weinheim (DE)
(72) Erfinder: Kritzer, Peter, 67147 Forst (DE); Klenk, Thomas, 69221 Dossenheim (DE)

(56) Entgegenhaltungen:
- WO-A-2008/120056
- DE-A1- 1 421 216
- DE-A1- 2 310 403
- DE-A1-102007 017 018
- DE-C1- 4 210 431
- JP-A- 9 017 401
- US-A- 3 514 341

## Beschreibung

### Technisches Gebiet

Die Erfindung betrifft einen Energiespeicher mit einem Speichergehäuse, welches ein Volumen einschließt, in welchem Zellen aufgenommen sind, wobei das Speichergehäuse das Volumen gegen die Umgebung abschirmt.

### Stand der Technik

In großen Batteriegehäusen befinden sich Zellen, die in sich hermetisch abgeschirmt sind. Diese Zellen werden in der Regel durch Kontaktkühlung gekühlt. Dabei ist die Temperatur innerhalb des Batteriegehäuses kleiner als die Temperatur außerhalb des Batteriegehäuses. Die Kontaktkühlung umfasst entweder drucklose Systeme, die wasserbasierte Medien, wie Wasser-Glykol-Mischungen, enthalten, oder echte Kimaanlagen, die mit Fluorkohlenwasserstoffen oder Kohlendioxid arbeiten.

Typische Volumina von Batterien, die in Hybrid- und Elektrofahrzeugen verwendet werden, betragen mehr als 50 l (l=Liter). Batterien von Elektrofahrzeugen weisen sogar Volumina auf, die größer als 100 l sind.

Vor diesem Hintergrund befindet sich in einem Batteriegehäuse üblicherweise ein unvermeidbares Totvolumen von ca. 5% des gesamten Volumens der Batterie. Je nach Ausführungsform der Zellen kann dieses Totvolumen aber auch wesentlich größer sein. Insbesondere geometrisch ungünstige Rundzellen erlauben eine nur relativ geringe Raumnutzung.

In einem hermetisch, insbesondere isochor, abgeschlossenen Batteriegehäuse können aufgrund von Druckschwankungen, die durch Temperaturschwankungen hervorgerufen werden, sowohl leichte Über- als auch Unterdrücke entstehen. Diese sind insbesondere für die Abdichtung der in der Batterie angebrachten Zellen kritisch und beeinflussen die Lebensdauer des gesamten Batterie-Systems.

Darüber hinaus können größere Druckschwankungen negative Einflüsse auf weitere Batteriekomponenten, insbesondere die elektrische Leistungs- und Überwachungs-Kontaktierung der Zellen sowie die Abdichtungen der Gehäusedurchführungen von Kabeln nehmen.

In einer derzeit praktizierten Ausführung [Lamm et al.: Lithium-lonen-Batterie. Erster Serieneinsatz im S400 Hybrid; ATZ 111 (2009); 490 ff.] wird ein vorhandenes Totvolumen von ca. 2 l zwischen den verwendeten Rundzellen durch Vergussmassen aus Silikon ausgefüllt. Diese Vergussmassen erhöhen aber wesentlich die Masse des gesamten Batterie-Systems, da 1 l Vergussmasse ca. 1,4 kg wiegt. Zudem ist diese Ausführung teuer und während der Produktion schwer und zeitaufwendig zu handhaben, da die aus zwei Komponenten bestehenden Vergussmassen vernetzen können und/ oder vernetzt werden müssen. Überdies verhindert diese Ausführung den partiellen Ersatz bzw. Austausch einzelner Zellen oder Module während einer Wartung oder Reparatur.

Die genannte Ausführung ist zwar bei relativ kleinen Batterien, wie "Mild-Hybrid-Batterien", noch umsetzbar, bei großen Batterien, wie sie für reine Elektrofahrzeuge verwendet werden, entstehen allerdings nicht mehr betriebstaugliche Massen und Kosten.

Falls das Totvolumen nicht mit festen bzw. flüssigen Substanzen aufgefüllt wird und die Batterie insbesondere nicht hermetisch abgedichtet ist, kann durch Temperaturschwankungen ein stofflicher Volumenaustausch mit der Umgebung erfolgen. Beim Abkühlen der Batterie kann diese Luft einsaugen. Hierbei können sowohl Feuchtigkeit als auch Staub ins Innere der Batterie gelangen. Die Feuchtigkeit kann im Inneren der Batterie kondensieren. Dies ist besonders kritisch, da Wasseranreicherungen zu Kurzschlüssen und Korrosion führen können.

Diese ausgetauschten Luftvolumina sind gering. Bei einem Temperaturunterschied von 50 K und einem Volumen von 5 l beträgt das ausgetauschte Luftvolumen 50/300 * 5 l, also etwa 1 l. Die dabei auftretenden Luftströme sind sehr niedrig, betragen nämlich ca. 1 l/h.

Eine weitere Anforderung an Batterie-Systeme besteht dahingehend, dass im Notfall freigesetzte brennbare Gase entweder sicher im Batteriegehäuse verbleiben oder sicher und gezielt abgeleitet bzw. abgebunden werden. Derzeitige Ausführungen machen von einem diffusionsoffenen Druckausgleichselement im Batteriegehäuse gebrauch. Ein Druckausgleichselement erlaubt einen stofflichen Austausch zwischen dem Inneren der Batterie und der Umgebung. Derzeit werden hier vor allem mikroporöse Membranen, beispielsweise aus Gore-Tex^{®}, verwendet, da sie neben einem stofflichen Austausch auch das Eindringen von Partikeln und flüssigem Wasser wirkungsvoll verhindern. Bei einer solchen Ausführung kann allerdings Wasser im gasförmigen Zustand ins Innere des Batteriegehäuses gelangen und dort kondensieren. Das kondensierte Wasser kann dann nicht mehr durch die mikroporöse Membran nach außen gelangen und sammelt sich folglich im Inneren des Gehäuses.

Auch dies birgt die Gefahr von Korrosion an den elektrischen Kontakten sowie von Kurzschlüssen der Leistungs-Elektronik. Beides hat einen Totalausfall der Batterie zur Folge.

Das genannte Problem gestaltet sich umso schlimmer, wenn zusätzlich zu dem Kondenswasser gasförmige salzbildende Substanzen ins Innere der Batterie gelangen. Beispielsweise reagiert Chlorwasserstoff (HCl) mit dem kondensierten Wasser zu Salzsäure, welche extrem korrosiv wirkt. Hier kann es zu Lochfraßkorrosion kommen. Des Weiteren wird die elektrische Leitfähigkeit des Wassers drastisch erhöht, was wiederum das Risiko von elektrischen Kurzschlüssen erhöht.

Eine verbesserte Ausführung macht vom Anbringen von Filtern bzw. Filter- und Entfeuchterelementen gebrauch. Durch diese Maßnahme kann auch Wasser im gasförmigen Zustand abgefangen und/ oder abgebunden werden. Das Wasser kann so nicht ins Innere der Batterie gelangen.

Bei diesen Ausführungen ist nachteilig, dass sie das Innere des Batteriegehäuses nicht dauerhaft abschließen. Die Wasser-Abbinde-Kapazität ist nach einer gewissen Zeit erschöpft. Das Entfeuchterelement ist daher je nach Luftfeuchte und Einsatzdauer ein auszutauschendes Verschleißbauteil. Des Weiteren muss absolut sicher gestellt werden, dass das Entfeuchterelement nicht mit Wasser kontaminiert wird, welches von außen ansteht. Dieses Wasser kann bei Auto-Batterien als Watwasser, bei Auto-Batterien bei Hochdruckreinigem oder bei Waschanlagen auftreten.

US 3 514 341 offenbart eine Ausführungsform, in der das Gehäuse mit einem Ventil ausgestaltet ist. Die Druckdifferenzen werden durch Anheben und Absenken des Ventilkolbens ausgeglichen ohne dass dabei ein stofflicher Austausch mit der Umgebung stattfindet.

### Darstellung der Erfindung

Der Erfindung liegt daher die Aufgabe zu Grunde, einen Energiespeicher anzugeben, bei dem ein problemloser Druckausgleich bei dauerhaft hoher Dichtheit gewährleistet ist.

Erfindungsgemäß wird die voranstehende Aufgabe durch einen Energiespeicher mit den Merkmalen des Patentanspruchs 1 gelöst.

Danach ist der eingangs genannte Energiespeicher **dadurch gekennzeichnet, dass** dem Speichergehäuse eine Volumenkompensationseinrichtung zugeordnet ist, welche Druckdifferenzen zwischen dem Inneren des Speichergehäuses und der Umgebung ausgleicht, ohne dass ein stofflicher Austausch zwischen Umgebung und Innerem des Speichergehäuses stattfindet.

Erfindungsgemäß kompensiert die Volumenkompensationseinrichtung typische Druckschwankungen, die durch Temperaturänderungen hervorgerufen werden. Danach findet erfindungsgemäß zwischen dem Inneren des Speichergehäuses und der Umgebung unter normalen Arbeitsbedingungen kein Stoffaustausch statt. Die Druckdifferenzen zwischen dem Inneren und der äußeren Umgebung des Speichergehäuses, welche durch Temperaturschwankungen hervorgerufen werden, werden erfindungsgemäß weitestgehend kompensiert. Die Zellen innerhalb des Speichergehäuses erfahren erfindungsgemäß keine mechanische Belastung durch wesentlich unterschiedliche Druckdifferenzen, die zwischen einem hermetisch abgeschlossenen, isochoren Inneren des Speichergehäuses und dessen Umgebung herrschen würden. Des Weiteren wird das Innere des Speichergehäuses dauerhaft abgedichtet, da kein stofflicher Austausch zwischen dem Inneren des Speichergehäuses und dessen Umgebung stattfindet.

Folglich ist die eingangs genannte Aufgabe gelöst.

Die Volumenkompensationseinrichtung könnte innerhalb des Speichergehäuses angeordnet sein. Hierbei kann eine Ausgleichsmöglichkeit in zwei Dimensionen realisiert werden. Die konkrete Ausgestaltung bewirkt vorteilhaft, dass die Volumenkompensationseinrichtung durch das feste Speichergehäuse geschützt ist. Des Weiteren wird vorteilhaft Totvolumen im Energiespeicher, insbesondere in einer Batterie, genutzt.

Die folgenden Ausführungsformen sind Stand der Technik:
Die Volumenkompensationseinrichtung könnte außerhalb am Speichergehäuse angeordnet sein. Hierdurch kann die Volumenkompensationseinrichtung problemlos auf Schäden überprüft werden.

Die Volumenkompensationseinrichtung könnte außerhalb des Speichergehäuses von diesem beabstandet angeordnet sein. Bei dieser konkreten Ausgestaltung könnte die Volumenkompensationseinrichtung durch einen Schlauch oder ein Rohr mit dem Speichergehäuse stofflich verbunden sein. Diese Anordnung ist vorteilhaft, wenn in der unmittelbaren Umgebung des Speichergehäuses nicht genügend Raum zur Verfügung steht bzw. andere freie Räume eingebunden werden können. Zudem können Vorteile entstehen, wenn eine später noch näher ausgeführte Berstfunktion integriert werden soll. Durch Trennung der Volumenkompensationseinrichtung vom Speichergehäuse kann entstehendes, brennbares bzw. toxisches Gas vom Energiespeicher, insbesondere einer Batterie, entfernt werden, von heißen Teilen ferngehalten werden oder ggf. sogar aus der Fahrgastzelle eines Kraftfahrzeugs entfernt werden.

Es könnte eine Volumenkompensationseinrichtung vorgesehen sein, die einen flexiblen Teil aufweist, der ein Volumen umgibt, in welches und/ oder aus welchem Luft zur Kompensation von Temperaturschwankungen bereitgestellt werden kann.

Vor diesem Hintergrund könnte die Volumenkompensationseinrichtung einen ausdehnungsfähigen Ballon aufweisen. Hierdurch ist eine Volumenkompensation in drei Dimensionen ermöglicht. Der Ballon könnte in einer starren Aufnahme aufgenommen sein. Hierdurch ist eine platzsparende Volumenkompensation in zwei Dimensionen möglich. Vor diesem Hintergrund könnte der Ballon mit einem Kolben oder einer Rollmembran zusammenwirken.

Die Volumenkompensationseinrichtung könnte einen ausdehnungsfähigen Faltenbalg aufweisen. Ein Faltenbalg kann in zwei Dimensionen bewegt, sowie sehr flach und damit platzsparend zusammengelegt werden.

Die Volumenkompensationseinrichtung könnte eine Rollmembran aufweisen. Rollmembranen können sehr gut an Wandungen geführt werden.

Die Volumenkompensationseinrichtung könnte einen Blasenspeicher aufweisen. Diese konkrete Ausgestaltung realisiert eine Ausgleichsmöglichkeit in drei Dimensionen, wobei vorzugsweise eine Ausgleichsmöglichkeit in einer oder auch zwei Dimensionen beschritten werden kann.

Vor diesem Hintergrund könnte die Volumenkompensationseinrichtung einen Akkumulator aufweisen. Dieser kann sehr hohe Druckdifferenzen ausgleichen.

Die Volumenkompensationseinrichtung könnte einen beweglichen Gehäusedeckel aufweisen. Hierdurch ist ein kompakter und teilearmer Aufbau der Batterie sicher gestellt, da der Gehäusedeckel ein ohnehin vorhandenes Bauteil darstellt Der Gehäusedeckel ist vorteilhaft beweglich und durch eine umlaufende Dichtung an dem Speichergehäuse fluiddicht angeordnet. Eine Druckänderung führt zu einem Anheben oder Absenken des Gehäusedeckels. Diese konkrete Ausgestaltung ist besonders vorteilhaft, da aufgrund der regelmäßig großen Fläche des Speichergehäuses bzw. des Gehäusedeckels für einen Druckausgleich nur relativ geringe Verschiebehöhen des Gehäusedeckels notwendig werden. Vor diesem Hintergrund kann die umlaufende Dichtung mit einem O-förmigen Querschnitt versehen, aber auch profiliert ausgestaltet sein.

Vor diesem Hintergrund könnte der Gehäusedeckel eine umlaufende, balgartige Dichtung aufweisen, wobei die Dichtung ins Innere des Speichergehäuses oder in die Umgebung des Speichergehäuses abragt. Der Gehäusedeckel kann hierdurch ohne großen mechanischen Widerstand bewegt werden. Die balgartige Dichtung ist vorteilhaft als umlaufende Faltendichtung ausgestaltet. Diese führt sowohl im druckbelasteten, abgesenkten als auch im druckentlasteten, angehobenen Zustand zu einer stofflichen Abdichtung. Die Faltendichtung kann dabei entweder nach außen gerichtet abragen oder nach innen gerichtet abragen.

Die Volumenkompensationseinrichtung könnte ein Filterelement aufweisen. Hierdurch ist sichergestellt, dass nahezu keine Partikel in ein veränderliches Ausgleichsvolumen, insbesondere eines Faltenbalgs, eintreten.

Die Volumenkompensationseinrichtung könnte ein Absorberelement aufweisen. In einem Absorberelement können schädigende Gase aufgenommen werden.

Erfindungsgemäß wird die vorhergenannte Aufgabe folgendermaben gelöst:
Die Volumenkompensationseinrichtung weist ein Ventil auf. Bei einem Störfall können im Energiespeicher, insbesondere in einer Batterie, gasförmige Substanzen frei werden. Diese Substanzen umfassen abgeblasene Elektrolyten oder Zersetzungsprodukte. Die pro schadhafte Zelle freigesetzten Volumina gasförmiger Substanzen betragen typischerweise mehr als 5 l. Diese Volumina werden in relativ kurzen Zeiten, nämlich in weniger als einer Minute, freigesetzt. Dies führt dann zu einer abnormen Druckerhöhung innerhalb des Speichergehäuses. Je nach vorhandenem Totvolumen kann das Speichergehäuse mechanisch so ausgelegt werden, dass es die dabei entstehenden Überdrücke noch toleriert. Eine solche Auslegung wäre allerdings schwer und würde spätestens beim Versagen mehrerer Zellen versagen. Es würde dann zu einem unkontrollierten Abblasen kommen. Unter Umständen kann es sogar zu einer Explosion kommen. Das hier beschriebene Ventil löst bei normalen, relativ kleinen Druckdifferenzen zwischen dem Inneren des Speichergehäuses und dessen Umgebung noch nicht aus. Bei abnormen größeren Druckdifferenzen werden Gase im Inneren der Batterie sicher abgeleitet.

Das Ventil weist einen Ventilkolben auf. Der Ventilkolben ist mit einer Feder verbunden und bei größeren Drücken im Inneren des Speichergehäuses wird ein Ausgang reversibel freigeben, durch den der Überdruck entweichen kann. Die Ableitung der ggf. brennbaren und toxischen Gase dann durch einen Schlauch oder ein Rohr erfolgen.

Das Ventil könnte eine Berstscheibe aufweisen oder als Berstscheibe ausgestaltet sein. Eine Berstscheibe öffnet vorteilhaft bei einem definierten Druck im Inneren des Speichergehäuses und leitet schnell Gas von innen nach außen ab. Die Berstscheibe kann mit einem Schlauch oder einem Filterelement kombiniert werden.

Das Ventil könnte ein Absorberelement aufweisen. In einem Absorberelement können schädigende Gase aufgenommen werden. Vor diesem Hintergrund könnten die entweichenden Gase in einem speziellen Absorberelement, insbesondere in einem Filterelement oder einer porösen Schüttung, aufgenommen werden. Hierdurch wird die Umgebung vor den entweichenden Gasen weitgehend geschont.

Der hier beschriebene elektrochemische Energiespeicher kann als Batterie oder als Superkondensator ausgestaltet sein. Auch hier sind die einzelnen Kondensator-Zellen in einem großen Gehäuse untergebracht und unterliegen derselben eingangs genannten Problematik.

Es gibt nun verschiedene Möglichkeiten, die Lehre der vorliegenden Erfindung auf vorteilhafte Weise auszugestalten und weiterzubilden. Dazu ist einerseits auf die nachgeordneten Ansprüche, andererseits auf die nachfolgende Erläuterung bevorzugter Ausführungsbeispiele der Erfindung anhand der Zeichnung zu verweisen.

In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert.

### Kurzbeschreibung der Zeichnung

### In der Zeichnung zeigen

- Fig. 1: eine schematische Ansicht eines Energiespeichers, dessen Speichergehäuse eine Volumenkompensationseinrichtung zugeordnet ist,
- Fig. 2: eine schematische Ansicht eines Energiespeichers, wobei eine Valumenkompensationseinrichtung Fig. 1-11 sowie Fig. 15-18 Volumenkompensationseinrichtungen wie sie im Stand der Technik verwendet werden außerhalb des Speichergehäuses angeordnet ist,
- Fig. 3: eine schematische Ansicht eines Energiespeichers, wobei eine Volumenkompensationseinrichtung Fig. 1-11 sowie Fig. 15-18 Volumenkompensationseinrichtungen wie sie im Stand der Technik verwendet werden innerhalb des Speichergehäuses angeordnet ist,
- Fig. 4: eine schematische Ansicht eines Energiespeichers, wobei eine Volumenkompensationseinrichtung Fig. 1-11 sowie Fig. 15-18 Volumenkompensationseinrichtungen wie sie im Stand der Technik verwendet werden vom Speichergehäuse durch einen Schlauch oder ein Rohr beabstandet angeordnet ist,
- Fig. 5: eine schematische Ansicht einer Volumenkompensationseinrichtung, die einen Kolben aufweist,
- Fig. 6: eine schematische Ansicht einer Volumenkompensationseinrichtung, die einen Ballon aufweist,
- Fig. 7: eine schematische Ansicht einer Volumenkompensationseinrichtung, die eine Rollmembran aufweist,
- Fig. 8: eine schematische Ansicht einer Volumenkompensationseinrichtung, die einen Faltenbalg aufweist, wobei in der oberen Ansicht der komprimierte und in der unteren Ansicht der expandierte Faltenbalg gezeigt ist,
- Fig. 9: eine schematische Ansicht einer Volumenkompensationseinrichtung, die eine Membran in einem Gehäuse nach Art eines Akkumulators oder Blasenspeichers aufweist,
- Fig. 10: eine schematische Ansicht einer Volumenkompensationseinrichtung, die innerhalb eines Speichergehäuses angeordnet ist und einen Faltenbalg aufweist, wobei zwischen Umgebung und innerem des Faltenbalgs optional ein Filterelement angeordnet ist,
- Fig. 11: eine schematische Ansicht der in Fig. 10 dargestellten Volumenkompensationseinrichtung, die innerhalb eines
- Fig. 12: Speichergehäuses angeordnet ist und einen Faltenbalg bei erhöhten Innendrücken aufweist, eine schematische Ansicht eines Ventils zum Abbau eines Überdrucks,
- Fig. 13: eine schematische Ansicht des Ventils gemäß Fig. 12, wobei dargestellt ist, wie ein Fluid aus dem Inneren des Speichergehäuses entweicht,
- Fig. 14: eine schematische Ansicht des Ventils gemäß Fig. 12, wobei dargestellt ist, wie ein Fluid aus dem Inneren des Speichergehäuses in ein Absorberelement entweicht,
- Fig. 15: eine schematische Ansicht einer Volumenkompensationseinrichtung, die einen Faltenbalg mit einer Berstscheibe aufweist,
- Fig. 16: eine schematische Ansicht einer Volumenkompensationseinrichtung, die eine Rollmembran mit einer Berstscheibe aufweist,
- Fig. 17: eine schematische Ansicht einer Volumenkompensationseinrichtung, die einen beweglichen Gehäusedeckel aufweist, wobei zwischen Gehäusedeckel und Speichergehäuse als Rahmendichtung eine O-Ringdichtung angeordnet ist, und
- Fig. 18: eine schematische Ansicht einer Volumenkompensationseinrichtung, die einen beweglichen Gehäusedeckel aufweist, wobei zwischen Gehäusedeckel und Speichergehäuse eine balgartige Dichtung angeordnet ist, welche ins Innere des Speichergehäuses oder in die Umgebung des Speichergehäuses abragt.

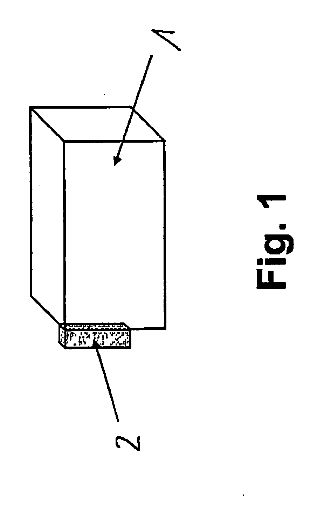

Fig. 1 zeigt eine schematische Ansicht eines Energiespeichers, dessen Speichergehäuse 1 eine Volumenkompensationseinrichtung 2 zugeordnet ist.

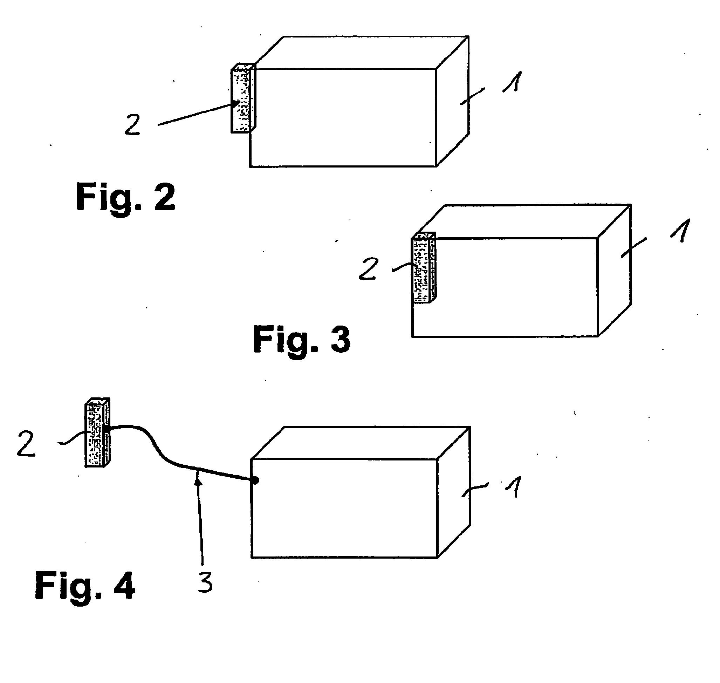

Fig. 2 zeigt eine schematische Ansicht eines Energiespeichers, wobei die Volumenkompensationseinrichtung 2 außerhalb des Speichergehäuses 1 angeordnet ist.

Fig. 3 zeigt eine schematische Ansicht eines Energiespeichers, wobei die Volumenkompensationseinrichtung 2 innerhalb des Speichergehäuses 1 angeordnet ist.

Fig. 4 zeigt eine schematische Ansicht eines Energiespeichers, wobei die Volumenkompensationseinrichtung 2 vom Speichergehäuse 1 durch einen Schlauch 3 oder ein nicht gezeigtes Rohr 4 beabstandet angeordnet ist.

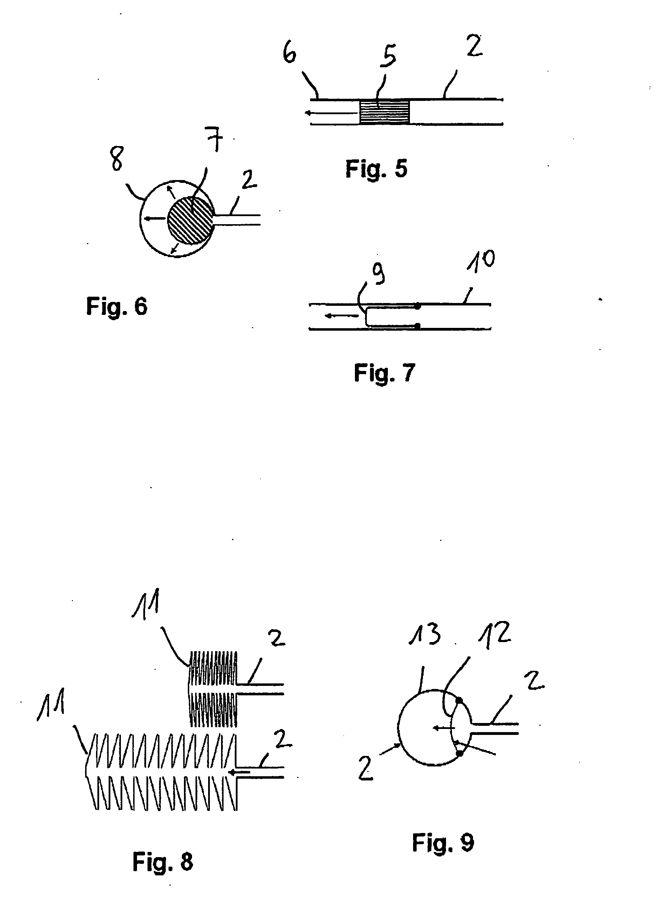

Fig. 5 zeigt eine schematische Ansicht einer Volumenkompensationseinrichtung 2, die einen Kolben 5 aufweist. Der Kolben 5 ist in einem Kolbengehäuse 6 aufgenommen und daher in zwei Dimensionen beweglich.

Fig. 6 zeigt eine schematische Ansicht einer Volumenkompensationseinrichtung 2, die einen Ballon 7 aufweist. Der Ballon 7 befindet sich in einem Ballongehäuse 8 und ist in diesem in drei Dimensionen ausdehnungsfähig. Denkbar ist auch, dass der Ballon 7 ohne Ballongehäuse 8 verwendet wird.

Fig. 7 zeigt eine schematische Ansicht einer Volumenkompensationseinrichtung 2, die eine Rollmembran 9 aufweist. Die Rollmembran 9 befindet sich in einem Rollmembrangehäuse 10 und ist in zwei Dimensionen beweglich.

Fig. 8 zeigt eine schematische Ansicht einer Volumenkompensationseinrichtung 2, die einen Faltenbalg 11 aufweist, wobei in der oberen Ansicht der komprimierte und in der unteren Ansicht der expandierte Faltenbalg 11 gezeigt ist.

Fig. 9 zeigt eine schematische Ansicht einer Volumenkompensationseinrichtung 2, die eine Membran 12 in einem Membrangehäuse 13 nach Art eines Akkumulators oder Blasenspeichers aufweist.

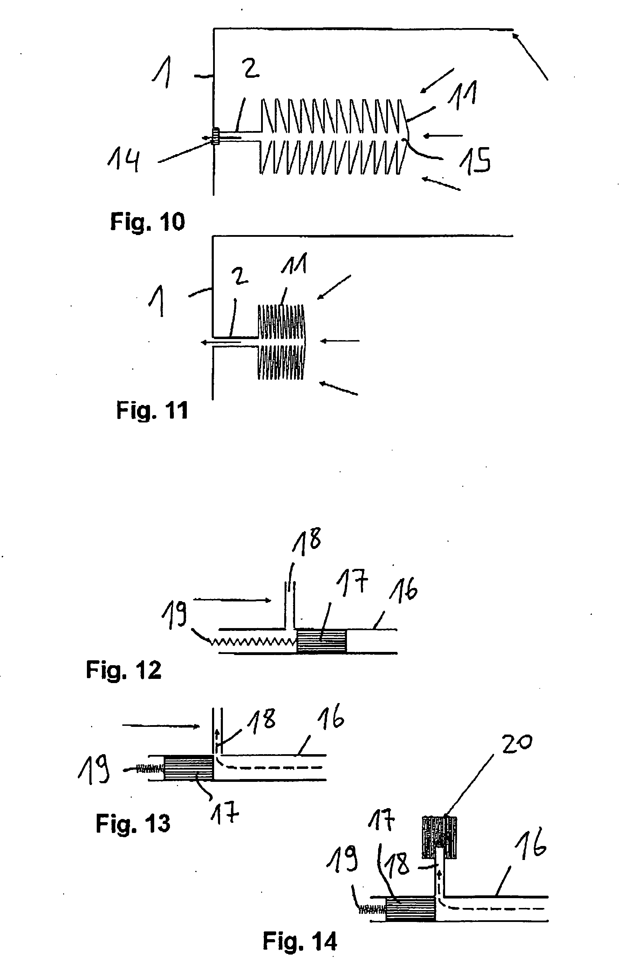

Fig. 10 zeigt eine schematische Ansicht einer Volumenkompensationseinrichtung 2, die innerhalb eines Speichergehäuses 1 angeordnet ist und einen Faltenbalg 11 aufweist, wobei zwischen Umgebung und innerem des Faltenbalgs 11 ein Filterelement 14 angeordnet ist. Der Faltenbalg 11 befindet sich im Inneren des Speichergehäuses 1. Das Ausgleichsvolumen 15 des Faltenbalgs 11 wird vor eindringenden Partikeln geschützt. Denkbar ist auch, den Faltenbalg 11 ohne Filterelement 14 zu betreiben.

Fig. 11 zeigt eine schematische Ansicht einer Volumenkompensationseinrichtung 2, die innerhalb eines Speichergehäuses 1 angeordnet ist und einen Faltenbalg 11 aufweist, welcher komprimiert ist.

Fig. 12 zeigt gemäß der Erfindung eine schematische Ansicht eines Ventils 16 zum Abbau eines Überdrucks. Das Ventil 16 weist einen federbelasteten Ventilkolben 17 auf, der einen Auslass 18 freigeben oder verschließen kann. Der Ventilkolben 17 wird durch die Feder 19 belastet.

Fig. 13 zeigt eine schematische Ansicht des Ventils 16 gemäß Fig. 12, wobei dargestellt ist, wie ein Fluid aus dem Inneren des nicht gezeigten Speichergehäuses 1 entweicht.

Fig. 14 zeigt eine schematische Ansicht des Ventils 16 gemäß Fig. 12, wobei dargestellt ist, wie ein Fluid aus dem Inneren des Speichergehäuses in ein Absorberelement 20 entweicht.

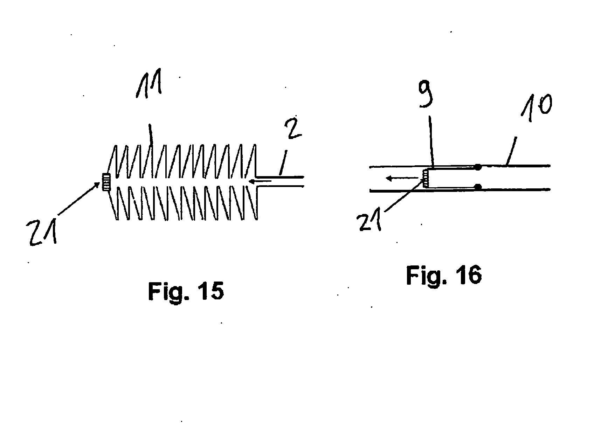

Fig. 15 zeigt eine schematische Ansicht einer Volumenkompensationseinrichtung 2, die einen Faltenbalg 11 mit einer Berstscheibe 21 aufweist.

Fig. 16 zeigt eine schematische Ansicht einer Volumenkompensationseinrichtung 2, die eine Rollmembran 9 mit einer Berstscheibe 21 aufweist.

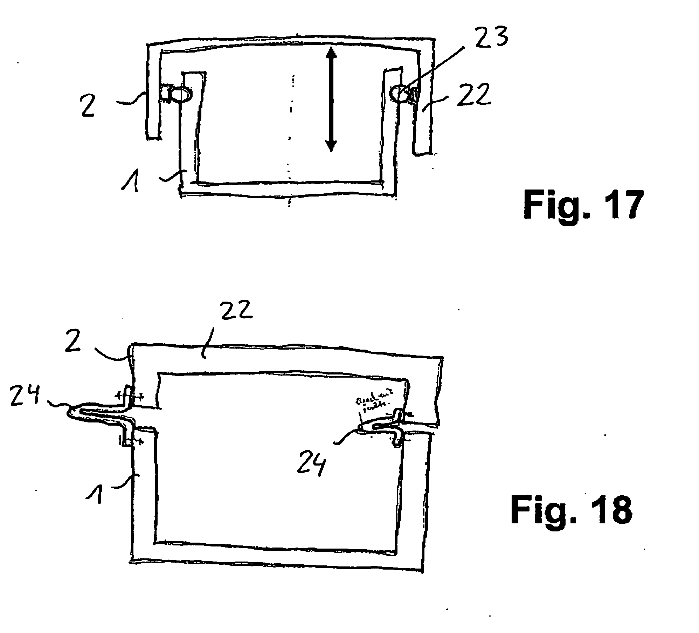

Fig. 17 zeigt eine schematische Ansicht einer Volumenkompensationseinrichtung 2, die einen beweglichen Gehäusedeckel 22 aufweist, wobei zwischen Gehäusedeckel 22 und Speichergehäuse 1 eine Rahmendichtung 23 angeordnet ist.

Fig. 18 zeigt eine schematische Ansicht einer Volumenkompensationseinrichtung 2, die einen beweglichen Gehäusedeckel 22 aufweist, wobei zwischen Gehäusedeckel 22 und Speichergehäuse 1 eine balgartige Dichtung 24 angeordnet ist, welche ins Innere des Speichergehäuses 1 oder in die Umgebung des Speichergehäuses 1 abragt, in Fig. 18 sind schematisch beide Ausführungsformen des Abragens gezeigt.

Der in den Figuren beschriebene Energiespeicher ist bevorzugt als Batterie, insbesondere als Kraftfahrzeugbatterie, ausgestaltet. Das Speichergehäuse 1 ist bevorzugt als Batteriegehäuse ausgestaltet.

Hinsichtlich weiterer vorteilhafter Ausgestaltungen und Weiterbildungen der erfindungsgemäßen Lehre wird einerseits auf den allgemeinen Teil der Beschreibung und andererseits auf die beigefügten Patentansprüche verwiesen.

Abschließend sei ganz besonders hervorgehoben, dass die zuvor gewählten Ausführungsbeispiele lediglich zur Erörterung der erfindungsgemäßen Lehre dienen, diese jedoch nicht auf diese Ausführungsbeispiele einschränken.

## Patentansprüche

1. Elektrochemischer Energiespeicher mit einem Speichergehäuse (1), welches ein Volumen einschließt, in welchem Zellen aufgenommen sind, wobei das Speichergehäuse (1) das Volumen gegen die Umgebung abschirmt, wobei dem Speichergehäuse (1) eine Volumenkompensationseinrichtung (2) zugeordnet ist, welche Druckdifferenzen zwischen dem Inneren des Speichergehäuses (1) und der Umgebung ausgleicht, ohne dass ein stofflicher Austausch zwischen Umgebung und Innerem des Speichergehäuses (1) stattfindet, und wobei die Volumenkompensationseinrichtung (2) innerhalb des Speichergehäuses (1) angeordnet ist,
**dadurch gekennzeichnet,**
**dass** die Volumenkompensationseinrichtung (2) ein Ventil (16) aufweist, wobei das Ventil (16) einen federbelasteten Ventilkolben (17) aufweist

2. Energiespeicher nach Anspruch 1, **dadurch gekennzeichnet, dass** die Volumenkompensationseinrichtung (2) ein Filterelement (14) aufweist.

3. Energiespeicher nach Anspruch 1 oder 2, **dadurch gekennzeichnet, dass** das Ventil (16) eine Berstscheibe (21) aufweist oder als Berstscheibe (21) ausgestaltet ist.

4. Energiespeicher nach einem der Ansprüche 1 bis 3, **dadurch gekennzeichnet, dass** das Ventil (16) ein Absorberelement (20) aufweist.

5. Energiespeicher nach einem der Ansprüche 1 bis 4, **gekennzeichnet durch** eine Ausgestaftung als Batterie.

## Claims

1. Electrochemical energy storage device with a storage device housing (1) enclosing a volume in which cells are received, the storage device housing (1) shielding the volume against the surroundings, the storage device housing (1) being assigned a volume compensation unit (2) which compensates pressure differences between the interior of the storage device housing (1) and the surroundings, without a material exchange taking place between the surroundings and the interior of the storage device housing (1), and the volume compensation unit (2) being arranged inside the storage device housing (1), **characterized in that** the volume compensation unit (2) has a valve (16), the valve (16) having a spring-loaded valve piston (17).

2. Energy storage device according to Claim 1, **characterized in that** the volume compensation unit (2) has a filter element (14).

3. Energy storage device according to Claim 1 or 2, **characterized in that** the valve (16) has a bursting disc (21) or is configured as a bursting disc (21).

4. Energy storage device according to one of Claims 1 to 3, **characterized in that** the valve (16) has an absorber element (20).

5. Energy storage device according to one of Claims 1 to 4, **characterized by** a configuration as a battery.

## Revendications

1. Accumulateur d'énergie électrochimique comprenant un boîtier d'accumulateur (1) qui renferme un volume dans lequel sont reçues des cellules, le boîtier d'accumulateur (1) protégeant le volume contre l'environnement extérieur, le boîtier d'accumulateur (1) étant associé à un dispositif de compensation de volume (2) qui compense des différences de pression entre l'intérieur du boîtier d'accumulateur (1) et l'environnement extérieur, sans qu'un échange de substances n'ait lieu entre l'environnement extérieur et l'intérieur du boîtier d'accumulateur (1), et le dispositif de compensation de volume (2) étant disposé à l'intérieur du boîtier d'accumulateur (1),
**caractérisé en ce que**
le dispositif de compensation de volume (2) présente une soupape (16), la soupape (16) présentant un piston de soupape (17) sollicité par ressort.

2. Accumulateur d'énergie selon la revendication 1, **caractérisé en ce que** le dispositif de compensation de volume (2) présente un élément de filtre (14).

3. Accumulateur d'énergie selon la revendication 1 ou 2, **caractérisé en ce que** la soupape (16) présente un disque de rupture (21) ou est réalisée sous forme de disque de rupture (21).

4. Accumulateur d'énergie selon l'une quelconque des revendications 1 à 3, **caractérisé en ce que** la soupape (16) présente un élément absorbant (20).

5. Accumulateur d'énergie selon l'une quelconque des revendications 1 à 4, **caractérisé par** une configuration sous forme de batterie.
